# EUROPEAN PATENT SPECIFICATION

(11) **EP 3 537 206 B1**
(45) Date of publication and mention of the grant of the patent: **17.11.2021**
(21) Application number: 19160800.9
(22) Date of filing: 05.03.2019
(51) Int. Cl.: G02F 1/01, H04B 10/11

(54) **ELECTRO-ABSORPTION MODULATOR ARRAY AND A DRIVE CIRCUIT THEREOF**
ELEKTROABSORPTIONSMODULATORANORDNUNG UND ANSTEUERUNGSSCHALTUNG DAFÜR
RÉSEAU DE MODULATEUR D'ÉLECTRO-ABSORPTION ET SON CIRCUIT DE COMMANDE

(30) Priority: 05.03.2018 EP 18159958
(43) Date of publication of application: 11.09.2019
(73) Proprietor: RISE Research Institutes of Sweden AB, 501 15 Borås (SE)
(72) Inventor: WANG, Qin, 164 25 KISTA (SE); PLATT, Duncan, 601 17 NORRKÖPING (SE); SALTER, Michael, 164 25 KISTA (SE); JAKONIS, Darius, 601 17 NORRKÖPING (SE); LIM, Jang-Kwon, 164 25 KISTA (SE)
(74) Representative: AWA Sweden AB

(56) References cited:
- US-A1- 2011 292 485
- US-A1- 2014 104 666
- QUINTANA C ET AL: "High Speed Electro-Absorption Modulator for Long Range Retroreflective Free Space Optics", IEEE PHOTONICS TECHNOLOGY LETTERS, IEEE SERVICE CENTER, PISCATAWAY, NJ, US, vol. 29, no. 9, 1 May 2017 (2017-05-01), pages 707-710, XP011646122, ISSN: 1041-1135, DOI: 10.1109/LPT.2017.2680842 [retrieved on 2017-04-14]
- D'HUMIÈRES BENOÎT ET AL: "The C3PO project: a laser communication system concept for small satellites", PROCEEDINGS OF SPIE, SPIE, 1000 20TH ST. BELLINGHAM WA 98225-6705 USA, vol. 10096, 24 February 2017 (2017-02-24), pages 1009611-1009611, XP060083229, ISSN: 0277-786X, DOI: 10.1117/12.2254046 ISBN: 978-1-5106-1533-5
- LEE B G ET AL: "A WDM-Compatible 4 x 32-Gb/s CMOS-driven electro-absorption modulator array", 2015 OPTICAL FIBER COMMUNICATIONS CONFERENCE AND EXHIBITION (OFC), OSA, 22 March 2015 (2015-03-22), pages 1-3, XP032784283, DOI: 10.1364/OFC.2015.TU3G.3
- RABINOVICH W S ET AL: "A cat's eye multiple quantum-well modulating retro-reflector", IEEE PHOTONICS TECHNOLOGY LETTERS, IEEE SERVICE CENTER, PISCATAWAY, NJ, US, vol. 15, no. 3, 1 March 2003 (2003-03-01), pages 461-463, XP011427027, ISSN: 1041-1135, DOI: 10.1109/LPT.2002.807904

## Description

### TECHNICAL FIELD OF THE INVENTION

The present invention relates to a drive circuit for operating an electro-absorption modulator (EAM) array, and to an EAM array employing such a drive circuit.

### BACKGROUND

Free space optics (FSO) systems are known to provide optical beams which are highly directional. The FSO systems thus have proven useful in transmitting significantly higher data rates with increased transmission security. Additionally, FSO systems eliminate the requirement of using over-allocated radio frequency (RF) bands, which is the conventional technique for long distance communication links such as satellite (CubeSat) and unmanned aerial vehicle (UAV) systems.

FSO systems provide an alternative for the low data rate (in the order of kbps in satellite applications) high beam divergence, and transmission losses of RF systems. To this end, asymmetrical retroreflective free space optic (RFSO) architectures using modulated retro-reflectors (MRR) have been developed to facilitate CubeSat and UAV applications as the localization and tracking complexities are potentially moved to the ground station.

Further, in most FSO applications a larger FOV (Field Of View) is necessary. In an asymmetrical optical communications link only one side of the link has a transmitting (TX) light source. Due to laser divergence, atmospheric loss, etc. only a small portion of the transmitted light will be focused onto the EAM for modulation and return. The larger the FOV, the larger the portion of TX energy is received and the higher the communication link margin. In more practical terms, e.g. for ground communications to a LEO (Low Earth Orbit) satellite, a higher FOV also reduces the requirements of the pointing of the satellite towards the ground base station and therefore results in increased robustness/reliability. Moreover, In FSO applications, the light strikes the EAM array and returns to the source, which requires an array of many small EAM pixels, and a suitable method for driving them.

Pixelated electro-absorption modulator (EAM)-based MRR systems have been proven successful in achieving high data rates of 70 Mbps in lab conditions and 45 Mbps in outdoor applications. In an asymmetrical optical communication link only one side of the link has a transmitting light source. In a LEO satellite due to laser divergence, atmospheric loss, etc. only a small portion of the transmitted light will be focused onto the EAM for modulation and return. Consequently, this limits the margin of the communication link of the FSO system. A challenge of high FOV (Field Of View) EAM based MRRs arises when there is a need for driving large arrays of many small pixels, which is necessary for achieving high data rates.

Therefore, there is a need to achieve high data rate FSO communication links which increase the communication link margin and reduces the accuracy requirements of the accurate pointing of the satellite towards the ground base station. Additionally, it is desirable to realize FSO systems with MRRs which, provide a broad vision for UAV equipment in communication to the ground station, preferably achieving an "all round vision".

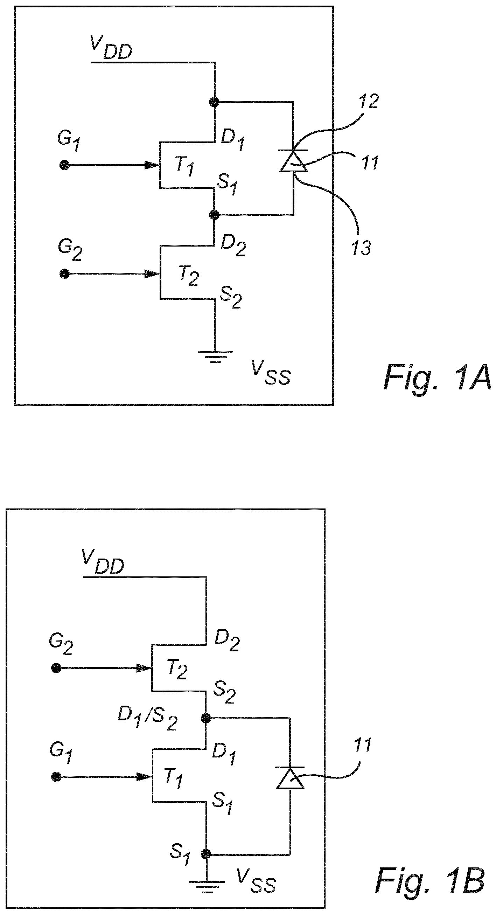

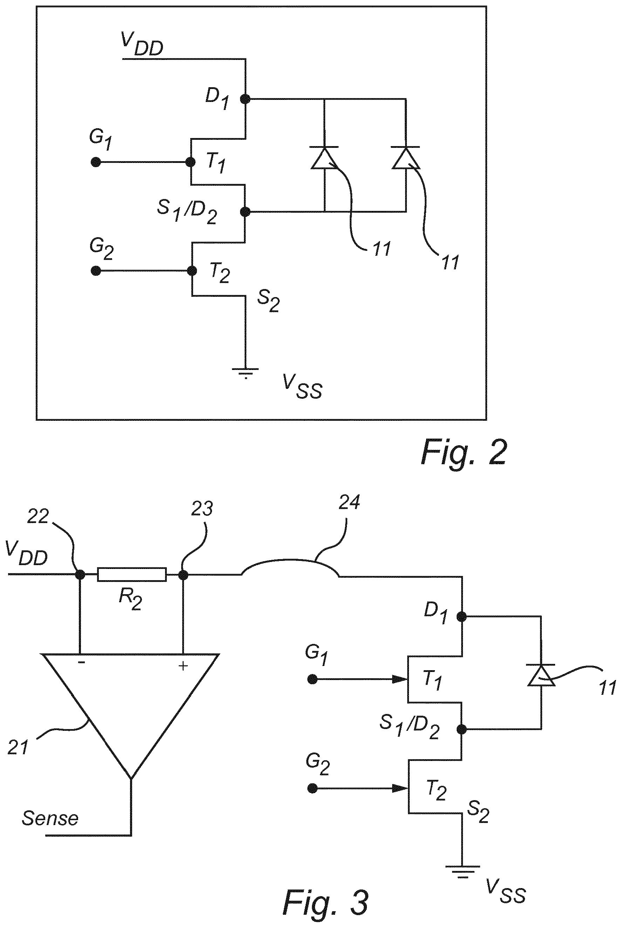

US2014104666A1 discloses electrical-optical (E-O) interfaces that use a rail-to-rail driving voltage of a differential capacitive load at high speed for high speed communications, and in particular, to silicon based photonics applications, for example, for applications with two capacitive loads to be driven in phase opposition. The driver may be used with any kind of optical modulator (e.g. Mach Zehnder, Ring Resonator, Electro Absorption Modulator). US2011292485A1 relates generally to retroreflectors, and more particularly, to modulating retroreflectors useful for returning an encoded signal to the source of an optical interrogation beam. The system illustrated in FIGS. 1 and 2 takes advantage of the dual nature of a multiple quantum well electro-absorption modulator as both a p-i-n-photodiode and as a MQW modulator that operates based on the quantum-confined Stark effect. XP011646122 discloses the design and implementation of a pixelated electro-absorption modulator-based modulating retroreflector (MRR) for high-speed optical wireless communications. This MRR was used in an outdoor link, operating at 150 Mb/s with a bit error rate (BER) of 1.22 * 10⁻⁶ at a range of 200m. The system was also tested in laboratory-controlled conditions achieving a data rate of 200 Mb/s with a BER of 2 * 10⁻⁴.

XP060083229 discloses a laser communication system concept for small satellites in which 6x6 EAM arrays operating in the infrared C-band (1530-1565 nm) were designed.

### SUMMARY OF THE INVENTION

It is accordingly an object of the present invention to provide a drive circuit for operating an electro-absorption modulator (EAM) array, and an EAM array which alleviate all or at least some of the above-discussed drawbacks of the presently known systems.

This object is achieved by means of a drive circuit and an EAM array as defined in the appended claims.

The term exemplary is in the present context to be understood as serving as an example, instance or illustration.

According to an aspect of the present invention there is provided an electro-absorption modulator (EAM) array as comprised in the appended independent claim 1. particular, it is possible to realize an EAM array having a relatively large number of EAM pixels e.g. at least 256 pixels, or at least 512 pixels or at least 1024 pixels, or at least 1600 pixels or at least, 4096 pixels, or at least 6400 pixels, etc. in a reliable and energy efficient manner. Moreover, it is possible to realize the EAM array on a substrate comprising III-V materials. According to some examples, the array comprises at least 6×6 EAM pixels or at least 12×12 EAM pixels or at least 256×256 EAM pixels or at least 512×512 EAM pixels or at least 1024×1024 EAM pixels

Hereby presenting a drive circuit suitable for operating large EAM arrays of many small pixels (which can be approximated as capacitive loads), capable of achieving a higher fill factor and lower power consumption than previously known solutions. Moreover, the inventive drive circuit is suitable to use with III-V compound semiconductors. The III-V compound semiconductors are obtained by combining group III elements (essentially Al, Ga, In) with group V elements (essentially N, P, As, Sb), such as e.g. GaAs or InP, which are suitable for applications in the NIR (near infrared) spectrum. One advantage of III-V material system specifically in the non-visible wavelengths of the optical spectrum is the broad range of energy bandgaps and corresponding wavelengths for instance in the NIR range between 780 nanometres to 3 micrometres. Thus, a variety of combinations of III-V materials can be employed to achieve the desired optical responses and operation wavelengths. For instance, 850 nanometre wavelength (which is widely used in short-haul data communication networks) or 1510-1580 nanometre wavelength range (which is used in long distance communication systems) or the 1950-2010 nanometre wavelength range(which is exploited in gas spectroscopy applications).

According to the invention, the plurality of drive circuits are integrated with the plurality of capacitive loads or EAM pixels in a monolithic arrangement on the substrate. The present inventors have realized that by integrating the drive circuits in the same substrate (more specifically between the capacitive loads or EAM pixels on the substrate) a bi-directional two-way communication is enabled. Further, by integrating the capacitive loads or EAM pixels and the plurality of drive circuits in a space-efficient fashion on the same substrate and in the same material system e.g. III-V material system, a surprisingly beneficial implementation of a large array of small EAM pixels in a power and cost efficient approach with a high fill factor can be achieved.

In some embodiments, a single drive circuit is not used to operate the whole array, but instead one or more pixels, as will be explained in the following.

The present invention is at least partly based on the realization that in order to achieve high data rates in e.g. EAM based modulating retro-reflectors (MRRs) having a large FOV, it is necessary to drive large arrays with many small pixels. For example, for high speed operation (500 MHz or higher), it is deemed necessary to keep the pixel size smaller than 250 µm due to the diodes' intrinsic capacitance which increases proportionally with the area. Further, in order to achieve a high FOV, the array size must be increased, and as previously explained, in order to maintain high speed capability, the pixel size must be kept constant which results in an almost unmanageable amount of individual pixels. However, by using the same drive circuit to sense a current output from the load, and in particular in EAM applications, one can effectively determine a location of the laser spot on the array. This in turn allows for actively driving only a small portion of the large array at any given time, which accordingly reduces power consumption levels. In other words, the size of the array is effectively decoupled from the power consumption.

The first power supply rail and the second supply rail provide the needed (DC) supply voltage to the circuit as known in the art. As is readily understood by the skilled reader the voltages may be positive or negative, and one of the rails may be grounded.

According to the invention, all the switches between the first and the second power supply rail are n-channel switches connected in series. Generally, when connecting the plurality of switches in series, e.g. connecting the first switch to the second switch, the source terminal of one of the first and second switches may be connected to the drain terminal of the other of the first and second switch. More specifically in some embodiments the source terminal of the first switch may be connected to the drain terminal of the second switch. In other embodiments however, the source terminal of the second switch may be connected to the drain terminal of the first switch.

Preferably, the source terminal of one of the first and second switches is connected directly to the drain terminal of the other of the first and second switch. The term directly is intended to be understood as electrical connection of the source and drain terminals without any other switches and/or other components in between the source and drain terminals. It should be appreciated that the direct connection between the source and drain terminals may be accomplished by directly wiring the source and drain terminals in the drive circuit. Additionally or alternatively, such direct connection may be achieved during manufacturing the switches e.g. during overgrowth fabrication process of the switches.

According to the invention, the capacitive load or EAM pixel may be connected in parallel with the first switch of the plurality of the switches. By connected in parallel it is intended to be understood that, one terminal of the capacitive load or EAM pixel may be connected to the drain terminal of the first switch and the other terminal of the capacitive load may be connected to the source terminal of the first switch. For instance, in case the capacitive load or EAM pixel may have the semiconductor structure of a PIN diode with a cathode and an anode terminal, the cathode terminal may be connected to the drain terminal of the first switch and the anode terminal be connected to the source terminal of the first switch.

In relation the text herein it is to be understood that when there are two devices or components (A and B) each having two terminals or the like (A1 and A2; B1 and B2, respectively), where A1 of A is connected to B1 of B, and A2 of A is connected to B2 of B, then there is for most embodiments a state where the potential difference between A1 and B1 is smaller than the potential difference between A1 and B2, and the potential difference between A2 and B2 is smaller than the potential difference between A2 and B1. The same is true for most embodiments where A1 of A is directly connected to B1 of B, and A2 of A is directly connected to B2 of B. Further, the current sensing circuit may be any suitable current sensing device as known in the art, e.g. any device that detects and converts current to an easily measured output voltage, which is proportional to the current through the measured path. For example, the current circuit may comprise a current sensing resistor which can be connected to an OP amplifier arranged in accordance with different techniques (e.g. high-side or low-side current sensing) depending on the desired application and specifications.

In use, the current sensing circuit may be connected to the first switch e.g. via the drain terminal of the first switch and to the at least one capacitive load or EAM pixel. It should however be appreciated that such connection may be a direct electrical connection or a connection via another intermediate component such as another switch, resistor, capacitor, etc. In some embodiments such an intermediate switch may be controlled by a control unit and be set in a closed and/or open state to connect and/or disconnect e.g. the current sensing circuit to the capacitive load or EAM pixel.

The capacitive load or EAM pixel may be any load having a capacitive component such as e.g. a photodiode, MOS-capacitor, etc.

The switches of the drive circuit may be any suitable controllable electronic switches. Preferably, the switches are in the form of semiconductor devices such as e.g. transistors. The switches may accordingly be bipolar junction transistors (BJTs), heterojunction bipolar transistor (HBTs), Field effect transistors (FETs), etc.

In accordance with an exemplary embodiment of the present invention, the first switch and the second switch are n-channel and/or p-channel field effect transistors (FETs). Thus, the transistors may for example be MOSFETs and/or JFETs. The transistors may be arranged in a complementary structure, i.e. in a CMOS (complementary metal-oxide-semiconductor) topology with a complementary and symmetrical pair of p-type and n-type FETs.

In some embodiments the first switch of each drive circuit of the plurality of drive circuits may be connected in parallel with two or more EAM pixels.

In some other embodiments, there is e.g. only two switches in each drive circuit, and this two switches are said first and said second switch; i.e. the plurality of switches may consist of only two switches, said two switches being said first switch and said second switch. Further, according to yet another embodiment, the EAM array may further comprise a control unit configured to:
- in a first mode, close the first switch and open the second switch in order to discharge the at least one EAM pixel;
- in a second mode, open the first switch and close the second switch in order to charge the at least one EAM pixel;
- in a third mode, open the first switch and open the second switch in order to detect the current output from the at least one EAM pixel by means of the current sensing circuit.

The inventors have realized that by using a control unit and a suitable algorithm to control the different states i.e. open/close states of the plurality of switches, a large array comprising a multitude of EAM pixels can be effectively addressed and modulated. For example, a certain number or sub-group of plurality of the EAM pixels may be selected for modulation by configuring the control unit to probe the array in the "sense" mode (i.e. third operational mode) to find and select the pixels generating a current output or e.g. identify and select the pixels generating a current output where that current output exceeds a certain threshold value. Accordingly, the EAM array can be operated in this way to account for and tremendously alleviate the demanding driving power requirements as opposed to the traditional solutions, where all the pixels of the array are driven simultaneously and modulated continuously.

Further, in accordance with another exemplary embodiment of the present invention, wherein the first switch and the second switch are n-channel FET transistors; and
wherein a first gate terminal and a second gate terminal of the first and second n-channel FET transistors are connected to a first alternating current input/drive signal and a second alternating current input/drive signal, wherein the first alternating current input/drive signal and the second alternating current input/drive signal are 180° ± 45° out of phase. As mentioned in the foregoing, for high speed EAM applications it is desirable to integrated the electronics with the optical array (c.f. CMOS visible light sensors in cameras). However, in the NIR spectrum where the optical material is based on the III-V material system (e.g. GaAs or InP), integration of complementary devices has proven to be difficult until now. In more detail, the present inventors realized that by utilizing a double n-channel FET configuration it is possible to integrate the switches in the III-V material and achieve a high fill factor for these materials as well. By only relying on n-channel devices, the issues associated with implanting a III-V p-channel device are effectively avoided.

The statement that the two input/drive signals (gate signals) are 180° ± 45° out of phase is to be construed as that they are substantially out of phase with each other. The gate signals may for example be complementary (i.e. 180° out phase). However, the signals need not be perfectly out of phase since in practice, issues with non-ideal components may need to be accounted for.

In accordance with yet another exemplary embodiment of the present invention, the current sensing circuit comprises a current sense resistor and a OP amplifier, the current sense resistor and the OP amplifier configured to generate a sense voltage to detect the current output from the at least one capacitive load or EAM pixel. The current sensing circuit may accordingly be placed on an associated Printed Circuit Board (PCB) with the other drive electronics (for operating the switches, providing rail voltages, etc.).

Further, in accordance with another exemplary embodiment of the present invention, the first switch is connected between the first power supply rail and the second switch, and wherein the second switch is connected between the first switch and the second power supply rail, wherein the first power supply rail has a first potential and the second power supply rail has a second potential. Naturally, any one of the first potential and the second potential may be zero, i.e. grounded.

More specifically, a drain terminal of one of the first and second switches may be connected to the first power supply rail and a source terminal of the other of the first and second switches may be connected to the second power supply rail. In more detail, in embodiments where the source terminal of the first switch is connected to the drain terminal of the second switch, the drain terminal of the first switch may be connected to the first power supply rail and the source terminal of the second switch may be connected to the second power supply rail. In other embodiments where the source terminal of the second switch is connected to the drain terminal of the first switch, the drain terminal of the second switch and the source terminal of the first switch may be accordingly connected to the first power supply rail and second power supply rail respectively. This way a current path can be formed e.g. from the first power supply rail to the first switch, to the second switch and to the second power supply rail when the first and second switches are both closed.

Further, in accordance with another aspect of the present invention, there is provided an electro-absorption modulator (EAM) array comprising a plurality of EAM pixels arranged on a substrate, the EAM array comprising:
a plurality of drive circuits, each drive circuit comprising:
   a first switch;
   a second switch connected in series with the first switch;
   a first power supply rail and a second power supply rail, wherein the first switch and the second switch are connected between the first power supply rail and the second power supply rail such that a current path is formed from the first power supply rail to the second power supply rail when the first switch and the second switch are closed (i.e. conducting);
   wherein the first switch is connected in parallel with at least one EAM pixel;
   a current sensing circuit connected to the at least one EAM pixel and being configured to detect a current output from the at least one EAM pixel; and
   a control unit configured to:
      in a first mode, close the first switch and open the second switch in order to discharge the at least one EAM pixel;
      in a second mode, open the first switch and close the second switch in order to charge the at least one EAM pixel;
      in a third mode, open the first switch and open the second switch in order to detect any current output from the at least one EAM pixel by means of the current sensing circuit.

With this aspect of the invention, similar advantages, exemplary embodiments and preferred features are present as in the previously discussed aspects of the invention, and vice versa.

In accordance with an exemplary embodiment of the present invention, the plurality of drive circuits are integrated in a Printed Circuit Board, PCB, and connected to the plurality of EAM pixels via wire-bond connections between the PCB and the substrate. This allows for facilitated manufacturing and scalability.

Thus, in accordance with an exemplary embodiment of the present invention the EAM array further comprises an external curved mirror arranged on the opposite side of said substrate relative to said EAM pixels, and wherein said EAM array is arranged to transmit the incident light onto said external curved mirror which is arranged to reflect said incident light back towards said EAM array. The monolithic integrated arrangement of the plurality of drive circuits with the plurality of EAM pixels allows for arranging a curved mirror "behind" the EAM array, which increases the FOV for the EAM array. Behind is in the present context to be understood as on the opposite side of the substrate relative to the light source/incoming light. As mentioned, by using an external curved mirror a higher FOV may be achieved for the EAM array. Also, the EAM array may further include one or more focusing lenses arranged in front of the EAM array in order to achieve a small laser spot size together with the large FOV. An additional advantage is that high FOV is effectively achieved at a low cost since this is achievable by standard low cost optical components.

Even further, in accordance with another exemplary embodiment of the present invention, the plurality of drive circuits are integrated on a CMOS ASIC circuit, the CMOS ASIC circuit being connected to the plurality of EAM pixels via flip-chip bond connections in a hybrid arrangement. In each of these embodiments it is possible to utilize a flat backside mirror which is integrated into the array. This results in a smaller FOV as compared to the embodiment with the monolithic arrangement with a curved mirror but may provide facilitated manufacturing. Thus, in accordance with another exemplary embodiment of the present invention, the EAM array is integrated with a back-side flat mirror to reflect an incident light.

Moving on, in accordance with yet another exemplary embodiment of the present invention, the EAM pixels are arranged in an m-by-n array, the m-by-n array having m rows and n columns, and wherein the EAM array comprises n drive circuits, the first switch of each drive circuit being connected in parallel with each EAM pixel in a respective column of the m-by-n array. Accordingly, the EAM array is operated in a "column-wise" fashion, meaning that each column is treated as a single load and all the pixels within the same column are operated simultaneously.

In various embodiments, each one of the m rows of the m-by-n array may comprise at least 1, or at least 6 or at least 10, or at least 12 or at least 32, or at least 64, or at least 100 or at least 256, or at least 500 or at least 1024 EAM pixels.

Additionally or alternatively, each one of the n columns of the m-by-n array may comprise at least 1, or at least 6 or at least 10, or at least 12 or at least 32, or at least 64, or at least 100 or at least 256, or at least 500 or at least 1024 EAM pixels.

According to some examples, the array comprises 6x6 EAM pixels or 12×12 EAM pixels or 256×256 EAM pixels or 512×512 EAM pixels or 1024×1024 EAM pixels.

In some embodiments there is only one switch connected in parallel with each EAM pixel. In other embodiments there may be more than one first switches in each drive circuit connected in parallel with each EAM pixel. For example, each EAM pixel may be connected with one or more first switches. Additionally or alternatively, sub-groups of EAM pixels may be connected with one or more first switches of each drive circuit.

However, in accordance with yet another exemplary embodiment of the present invention, the first switch of each drive circuit is connected in parallel with only two EAM pixels of said plurality of EAM pixels. In other words, the EAM pixels are operated "pair-wise", meaning that the plurality of pixels are divided in a plurality of separate sub-groups each sub-group consisting of two pixels, and each sub-group is independently operated by one drive circuit.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to exemplary embodiments thereof illustrated in the attached drawings, wherein:

For exemplifying purposes, the invention will be described in closer detail in the following with reference to exemplary embodiments thereof illustrated in the attached drawings, wherein:
Fig. 1A is a schematic illustration of a drive circuit for operating an electro-absorption modulator (EAM) array in accordance with an embodiment of the present invention;
Fig. 1B is a schematic illustration of a drive circuit in accordance with another embodiment of the present invention;
Fig. 2 is a schematic illustration of a drive circuit in accordance with another embodiment of the present invention;
Fig. 3 is a schematic illustration of drive circuit comprising a current sensing circuit in accordance with an embodiment of the present invention;
Fig. 4A-C are schematic illustrations of the drive circuit from Fig. 1A in a first, second and third (operation) mode;
Fig. 5A-C are a schematic illustrations of the drive circuit from Fig. 1B in the first, second and third (operation) mode;
Fig. 6 is a schematic illustration of an EAM array arrangement with drive electronics integrated into a PCB in accordance with one embodiment of the present invention;
Fig. 7 is a schematic illustration of an EAM array integrated with a CMOS ASIC in a flip-chip hybrid packaging structure in accordance with another embodiment of the present invention;
Fig. 8 is a schematic illustration of a drive circuit in a hybrid CMOS ASIC arrangement in accordance with another embodiment of the present invention;
Fig. 9A is a schematic illustration of a monolithic integrated structure where drive circuit is integrated within the EAM array in accordance with an embodiment of the present invention;
Fig. 9B is a schematic illustration of an m-by-n array of a monolithic structure where the EAM array is operated in a column-wise fashion in accordance with an embodiment of the present invention;
Fig. 10 is a schematic illustration of an external curved mirror arranged with a monolithic integrated EAM array in accordance with an embodiment of the present invention;
Fig. 11 is a schematic illustration of a plurality of external optics, e.g. focusing lenses arranged in front of the EAM array in accordance with an embodiment of the present invention;
Fig. 12 is an illustration of a ray optic computer simulation in an EAM pixel array and the EAM array of Fig. 10 in accordance with an embodiment of the present invention;
Fig. 13 is a schematic illustration of a process with which the monolithic EAM array and drive circuit can be manufactured in accordance with an embodiment of the present invention.

### DETAILED DESCRIPTION

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

In Fig. 1A a schematic illustration of an exemplary drive circuit for operating an electro-absorption modulator (EAM) array is provided. The drive circuit comprises a first switch T1 and a second switch T2 connected in series. The first switch T1 is connected between a first power supply rail V_{DD} and the second switch T2. The second switch T2 is connected between the first switch T1 and the second power supply rail Vss. The drive circuit further comprises a capacitive load or EAM pixel 11. The first switch T1 is connected in parallel with the capacitive load or EAM pixel 11. More generally a plurality of drive circuit units may be provided to address an EAM array. Each drive circuit unit may include two or more of such capacitive load or EAM pixels, for example two, three, four, etc. The switches may for example be bipolar junction transistors (BJTs), heterojunction bipolar transistors (HBTs), field-effect-transistors (FETs), metal―oxide―semiconductor field-effect transistors (MOSFETs), junction FET transistors (JFETs), n-type JFETs or p-type JFETs, etc. The switches may have at least three terminals such as a gate terminal G1, G2, a drain terminal D1, D2 and a source terminal S1, S2. The first switch T1 may be connected with the second switch T2 in such an arrangement wherein the source terminal S1 of the first switch T1 is in connection with the drain terminal D2 of the second switch T2.

The capacitive load or EAM pixel 11 may be arranged to be connected between the drain terminal D1 of the first switch T1 and the connection node of the source terminal S1 of the first switch T1 and the drain terminal D2 of the second switch T2.

The drive circuit is preferably realized by the first switch T1 and the second switch T2 being in a double n-channel JFET configuration, wherein the process efficiency of producing identical devices may be achieved.

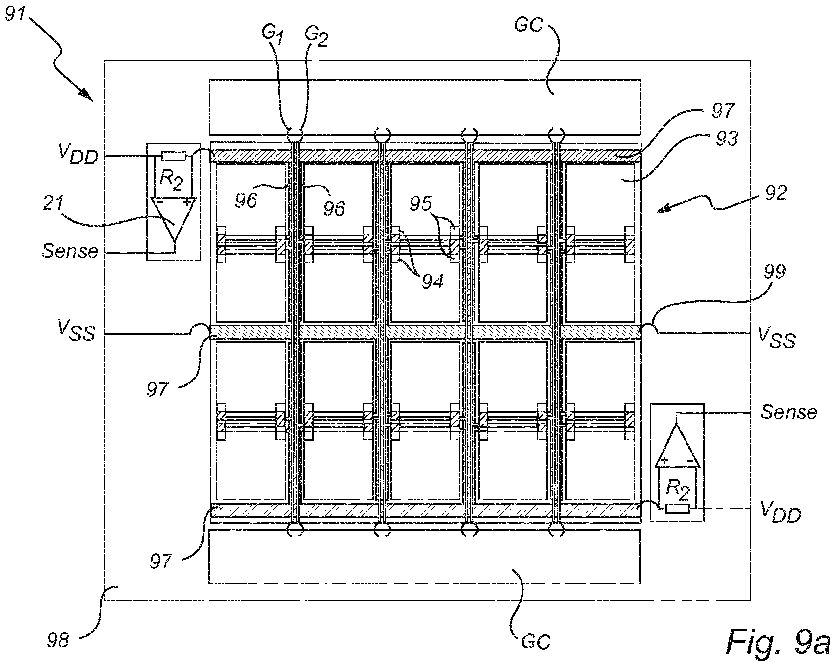

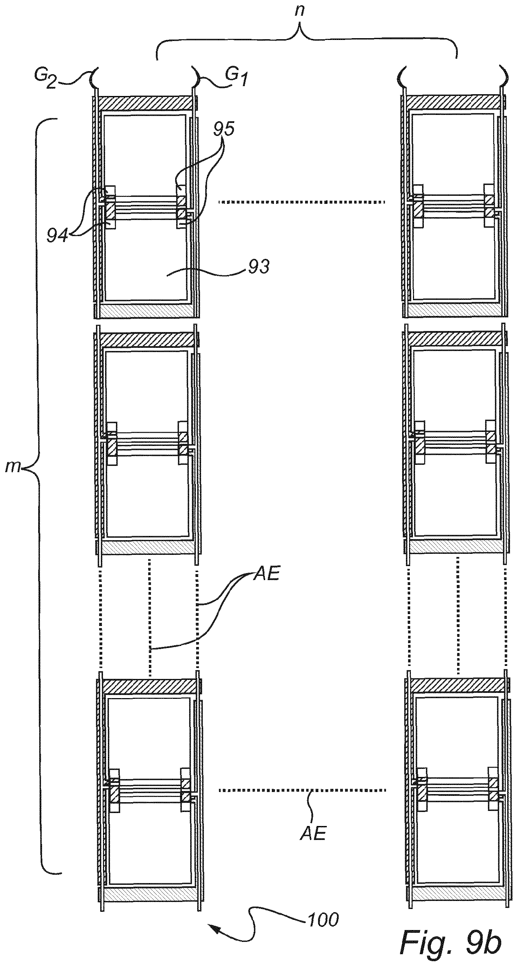

The capacitive load or EAM pixel 11 may have the semiconductor structure of a PIN diode with a cathode 12 and an anode 13 terminal. The capacitive load or EAM pixels 11 being addressed/driven/modulated by the drive circuit may therefore be a plurality of the EAM pixels within an integrated EAM array in accordance with one aspect of the current invention. The pixels can be activated/deactivated individually, in a pair-wise or in a column-wise fashion (see e.g. Fig. 9A and Fig. 9B). To operate the EAM pixels in a pair-wise arrangement the drive circuit addressing each of the pixels is a common drive circuit shared by the pixel pair. By employing this arrangement, the array area required for drive electronics is reduced and therefore the fill factor of the EAM array is improved. A plurality of such EAM pixel pairs can be arranged in an m-by-n array and operated in a column-wise fashion to scale up the array size. The cathode 12 and anode 13 terminals of each EAM pixel 11 are configured to be connected to the first drive circuit transistor T1. By alternating the complementary high speed microwave drive signals connected to the gate terminals of the transistors G1, G2 each pixel can be activated/deactivated.

The gate terminals G1, G2 of the first and second transistors T1, T2 are configured to be electrically connected to alternating current AC input/drive signals. The AC input signals may be out of phase in respect to each other. G1 and G2 input signals may preferably differ in phase in a range 135° - 225° and more preferably they are complementary signals i.e. 180° out of phase. The gate input signals G1 and G2 arrive at each transistor at each cycle of circuit activation to open and/or close the transistors in order to charge and/or discharge the capacitive load or EAM pixel 11. The charge and discharge period of each capacitive load or EAM pixel is determined by the characteristics of the circuit and the capacitive load or EAM pixel such as the voltage across the capacitive load or EAM pixel V_{c}, the amount of capacitance C, the time constant of the capacitive load or EAM pixel (*τ*), the power supply of the drive circuit (V_{DD}/ V_{SS}) or the total impedance in the drive circuit in various constructions. The basics of such charge and discharge cycles are considered to be readily understood by the skilled person in the art and therefore for the sake of brevity, further explanations and details will be omitted in the rest of the description.

Further details of different operation modes of the drive circuit will be provided in reference to figures 1B-5C.

Fig. 1B illustrates a drive circuit in accordance with another embodiment of the present invention where the first switch T1 is arranged to be connected between the second switch T2 and the second power supply rail V_{SS}. The second switch T2 is arranged to be connected between the first power supply rail V_{DD} and the first switch T1. The first switch T1 may be connected with the second switch T2 in such an arrangement wherein the drain terminal D1 of the first switch T1 is connected to the source terminal S2 of the second switch T2. The first switch T1 is configured to be connected in parallel with the capacitive load or EAM pixel 11.

Fig. 2 schematically illustrates the drive circuit wherein the first switch T1 and the second switch T2 are in series and the first switch T1 is connected in parallel with two capacitive load or EAM pixels 11.

Fig. 3 illustrates the schematics of a drive circuit comprising a current sensing circuit in accordance to one embodiment of the current invention. The current sensing circuit comprises a current sense resistor R2 and an OP amplifier 21, the current sense resistor R2 and the OP amplifier 21 are configured to generate a sense voltage sense to detect the current output from the capacitive load or EAM pixel 11. The OP amplifier 21 and the sense resistor R2 are here connected to the drain terminal D1 of the first transistor T1 and the cathode terminal 12 of the capacitive load or EAM pixel 11. The current sense resistor R2 is connected between the inverting input node 22 and non-inverting input node 23 of the OP amplifier 21. The OP amplifier 21 is connected to the power supply rail V_{DD} at the inverter input node 22.

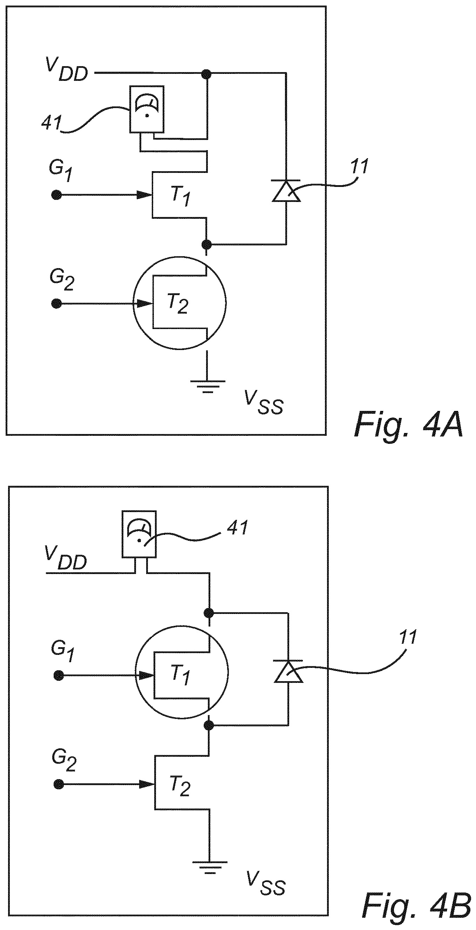

In Fig. 4A an illustration of the drive circuit from Fig. 1A in a first operation mode is provided. The first switch T1 is in closed state and the second switch T2 is in open state. The first switch T1 is connected in parallel with the capacitive load or EAM pixel 11. In the first mode current flows through the first switch T1 and the capacitive load or EAM pixel 11 is discharged from V_{DD} to 0. The current can be monitored at a current probe 41 arranged in the drive circuit. In more detail, the capacitive load or EAM pixel 11 is short circuited by the first switch T1 wherefore the voltage across the capacitive load or EAM pixel is brought down to zero and this first operation mode may be labeled as a discharging mode. Also, the potential floating point (node) between the two switches T1, T2 is in this first mode V_{DD}.

In Fig. 4B an illustration of the drive circuit in a second operation mode is provided. The first switch T1 is in open and the second switch T2 is in closed mode with the first switch T1 connected in parallel with the capacitive load or EAM pixel 11. In the second mode current flows through the second switch T2 and the capacitive load or EAM pixel 11 is charged from 0 to V_{DD}. The current can be measured at a current probe 41 installed in the drive circuit. In more detail, the floating point (i.e. the node between the two switches) is now connected to ground and effectively brought down to zero potential, wherefore the potential at the floating point is decreased from V_{DD} to zero. Accordingly, the voltage across the capacitive load or EAM pixel is V_{DD}, and the second operation mode can accordingly be labeled as a charging mode.

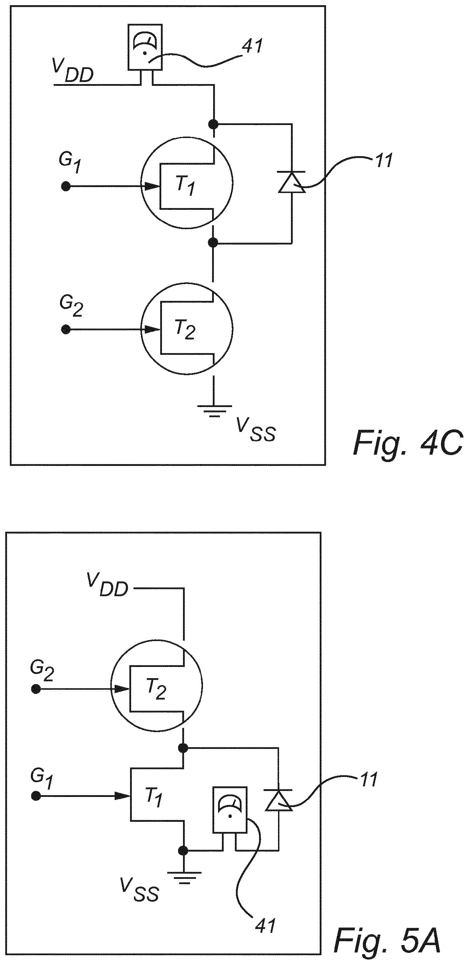

In Fig. 4C an illustration of the drive circuit in the third operation mode is provided. The first switch T1 in open and the second switch T2 in open mode with the first switch T1 connected in parallel with the capacitive load or EAM pixel 11. In the third mode a current output generated from the capacitive load or EAM pixel is directed to the current sensing circuit (shown here is a current probe 41). In a practical example the current can be generated in a photonic process (e.g. photocurrent generated by a laser illumination of an EAM pixel forming the capacitive load or EAM pixel).

Fig. 5A schematically illustrates the first operation mode of the drive circuit illustrated in Fig. 1B. In the first operation mode (i.e. "discharging mode") the first switch T1 is closed (i.e. conducting or on) and the second switch T2 is open (i.e. not conducting or off). The first switch T1 is also here connected in parallel with the capacitive load or EAM pixel 11. However, the first switch T1 is now arranged on the "lower side", i.e. between the second power supply rail Vss (grounded in this embodiment) and the second switch T2. In the first mode current flows through the first switch T1 and the capacitive load or EAM pixel 11 is discharged from V_{DD} to 0 Volts.

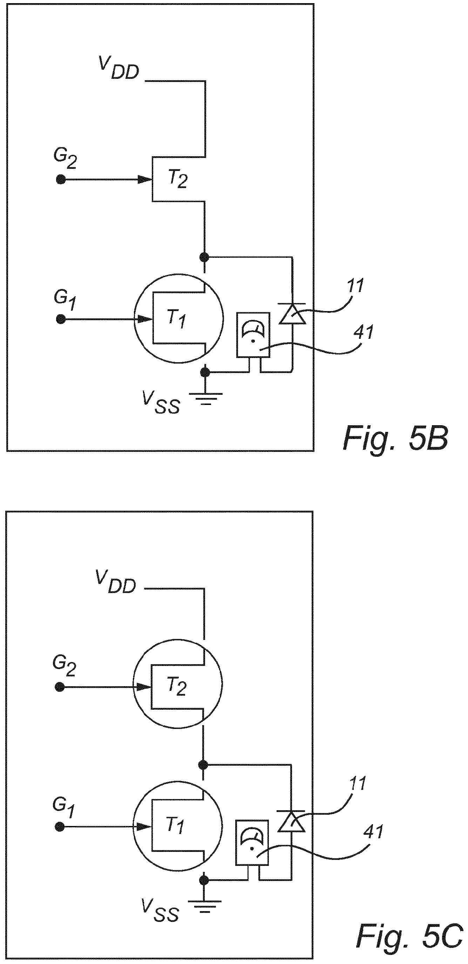

Fig. 5B schematically illustrates the second operation mode of the drive circuit in Fig. 1B. In the second operation mode the first switch T1 is open and the second switch T2 is closed, and the first switch T1 is connected in parallel with the capacitive load or EAM pixel 11. In the second mode current flows through the second switch T2 and the capacitive load or EAM pixel 11 is charged from 0 Volts to V_{DD}.

Fig. 5C schematically illustrates the third operation mode of the drive circuit illustrated in Fig. 1B. In the third mode the first switch T1 is open and the second switch T2 is open with the first switch T1 connected in parallel with one capacitive load or EAM pixel 11. In the third mode a current output generated from the capacitive load or EAM pixel 11 is directed to a current sensing circuit. The current sensing circuit being represented by a current probe 41.

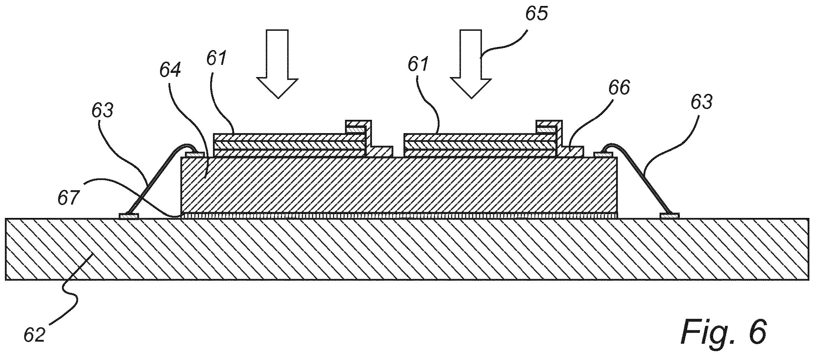

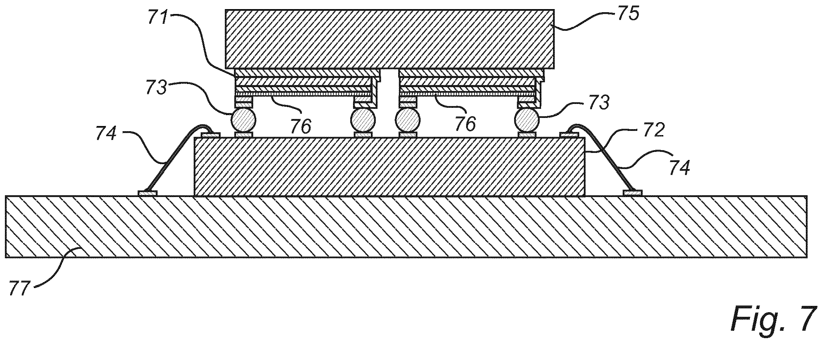

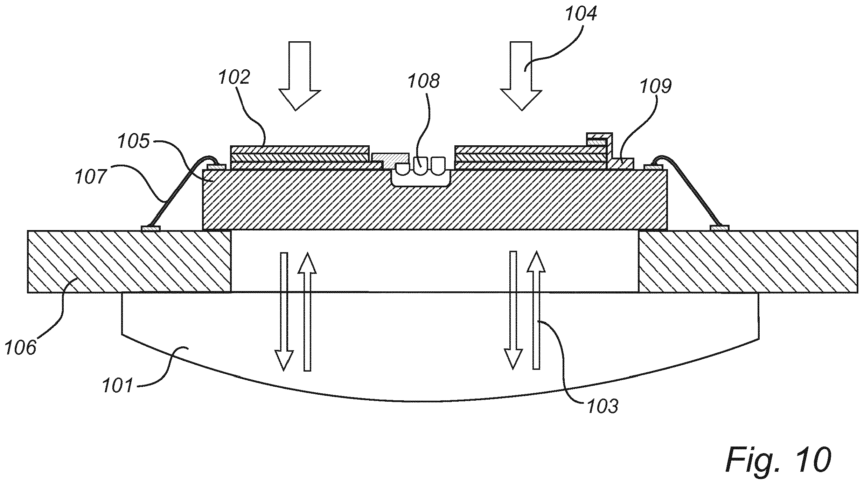

The plurality of drive circuits comprising switches T1, T2 having gate terminals G1, G2, drain terminals D1, D2 and source terminals S1, S2 together with other drive electronics may be subsequently integrated into a PCB (as e.g. shown in Fig. 6), into an application-specific-integrated-circuit (ASIC) unit in a hybrid packaging arrangement (as e.g. shown in Fig. 7) or maybe monolithically integrated with the EAM pixels on a single substrate (as e.g. shown in Fig. 9A and 10). The substrate may be a desired compound combination of III-V semiconductor materials such as GaAs, InP, InAs, InGaAs, InGaAsP, etc.

In Fig. 6 a schematic illustration of a plurality of EAM pixel arrays 61 integrated with a PCB 62 carrying the drive electronics is provided. In this arrangement, all the drive circuits (not shown in detail here) are integrated into the PCB 62 structure and are connected with wire-bonds 63 to each EAM pixel 61 in the plurality of arrays. This does not necessarily mean that each pixel has a separate drive circuit, whilst in fact one drive circuit may be used to operate two or more EAM pixels simultaneously. The EAM pixels 61 are implemented in the face-up arrangement on e.g. an InP substrate 64 with the incident light 65 striking the pixels. The EAM pixels 61 are in contact with the InP substrate 64 with e.g. InGaAs contact layers 66. A flat back-side mirror 67 is arranged to be integrated with the InP substrate 64.

In Fig. 7 a schematic illustration of an EAM array 71 integrated with a CMOS ASIC 72 in a flip-chip hybrid packaging structure is provided. In this embodiment the drive circuit (including the sense circuit) are implemented on the CMOS ASIC 72 structure in the area underneath each EAM pixel 71. Connections to each cathode 12 and anode 13 of each EAM pixel 71 are made to the ASIC 72 through solder balls/bumps 73 between the ASIC 72 and EAM pixels 71. By placing drive and sense electronics on the ASIC 72 integrated drive/sense structure, and connecting it to the PCB 77 by flip-chip wire-bond 74 connection, the fill factor of the array can be improved. To operate this circuit, either by pixel, row or column, the power (e.g. V_{DD}) and ground (e.g. Vₛₛ) lines are activated. Then in drive mode, the drive line is switched on and off to modulate the EAM pixel 71. In sense mode (i.e. third operation mode), the drive line is turned off/deactivated, and the sense line voltage measured to determine the photocurrent output of the EAM pixels 71. In this embodiment the EAM pixels 71 are configured to be arranged in face-down flipped orientation in respect to an InP substrate 75. The EAM array 71 may be integrated with a back-side flat mirror 76 to reflect an incident light.

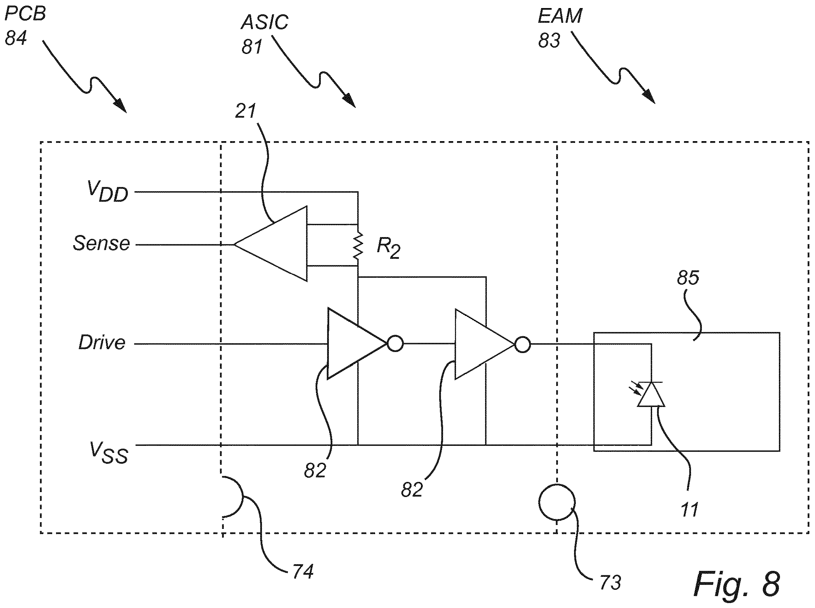

In Fig. 8 a schematic illustration of the drive/sense electronics in a hybrid CMOS ASIC 81 arrangement is provided. The transistors may be arranged in a complementary structure i.e. in a CMOS topology with a symmetrical pair of n-type and p-type JFET transistors. In this arrangement the gate input signals for both gate terminals G1, G2 is a common input/drive signal. Each complementary pair forms a CMOS buffer/inverter unit 82. To address the EAM pixels 83, two of the buffer/inverter units 82 may be arranged to be connected in series. The rest of the electronics e.g. V_{DD} and Vss lines to either "drive" or "sense" each pixel, may be implemented onto a companion PCB 84.

In each of the above discussed drive circuits, a control unit (not shown) and a suitable algorithm could be implemented. For example, the control unit may be configured to scan the array in the "sense" mode (i.e. third operational mode) to find the pixels that have a higher photo-current 85. This would imply that the laser spot has focused on these pixels which locates the beam. The whole array is scanned and only the pixels that are generating photo-current 85 would then be chosen in the next cycle to be driven/modulated with data. The EAM array 83 is operated in this way continuously, i.e. sense, drive, sense, drive, etc. to account for the laser beam moving around on the array. By only driving this selected set of pixels the drive power is tremendously reduced as opposed to the traditional solutions, where the whole array is driven continuously.

In each of the above-mentioned embodiments the EAM array may be integrated with a back-side flat mirror 67, 76 to reflect an incident light. This configuration may provide a facilitated fabrication procedure.

In Fig. 9A a schematic illustration of a monolithic integrated structure 91 where drive/sense electronics are integrated within the EAM array 92 is provided. Here, a single substrate is exploited to implement the EAM pixels 93 and the drive electronics in a space-efficient fashion which allows for selective activation/deactivation of EAM pixels 93 based on the desired application. This arrangement has been found surprisingly beneficial to realize implementation of a large array 92 of small EAM pixels 93 in a power and cost efficient approach.

The array area dedicated for drive electronics is kept to a minimum to maintain a high array fill factor. The drive transistors are implemented between the rows and columns of EAM pixels 93 connecting to the cathode 94 and anode 95 terminals of each EAM pixel. The small EAM pixels 93 are driven by embedded transistors which act as a buffer between the drive electronics from the EAM pixel PIN diode capacitance. Thus the capacitance is reduced significantly, typically by an order of magnitude, and high data rates can be reached. The gate signals G1, G2 for each pixel in a column are routed in a vertical direction on the top metal layer 96 and are in connection with the gate control and sequencing circuits (GC). The V_{DD} and V_{SS} signals are brought in horizontally on the bottom metal layer 97. These signals also serve a double purpose as the reference planes for the gate lines by being brought down vertically. They therefore serve as DC power and ground, as well as RF (AC) ground. The EAM array 92 can be implemented "face-up" and connected to a PCB 98 through wire-bond 99 connections. In the embodiment illustrated in Fig. 9A the current sensing resistor and amplifier are implemented on the PCB 98. By applying power through specific V_{DD} and Vss lines 97 two rows are addressed. Then a specific set of two pixels can be driven/addressed/modulated by applying drive signals to a specific set of G1 and G2 gate terminals. To operate these two pixels in "sense" mode, the gate signals G1, G2 are grounded turning off the drive signals and current through the V_{DD} line would be monitored through the off-chip resistor R2 and sense OP amplifier 21.

In Fig. 9B a schematic illustration of an m-by-n array arrangement of EAM pixels is provided. This arrangement demonstrates the scalability of the EAM array. In this arrangement the EAM array can be operated in a column-wise fashion and each column of the m-by-n array is addressed as a single load by using G1 and G2 gate signals addressing all the EAM pixels (93) within the selected column (100). In the embodiment illustrated in Fig. 9B, the dotted lines (AE) illustrate the array extension in m rows and n columns.

Further, in Fig. 10 a schematic illustration of an external curved mirror 101 arranged with the monolithic integrated EAM array 102 in accordance with an embodiment of the present invention is provided. In this embodiment, the EAM-integrated back-side flat mirror 67, 76 is removed and an external curved back-side mirror 101 is arranged on the opposite side of the substrate relative to the EAM pixels 102. The EAM array is configured to be operated in purely transmissive mode no integrated back-side mirror with a double pass of light 103 through the array and a small corresponding laser spot size. The incident light is therefore transmitted onto the external curved mirror 101. The external curved mirror 101 is arranged to reflect the incident light 104 back on the EAM array. This way a high FOV may be achieved with the EAM array, for instance an FOV of 30 degrees may be achieved. The EAM pixels 102 are implemented on the face-up arrangement with the InP substrate 105 and connected to the PCB 106 via wire-bond 107 connections. The drive circuit 108 and gate contact layers 109 are implemented on the same InP substrate 105.

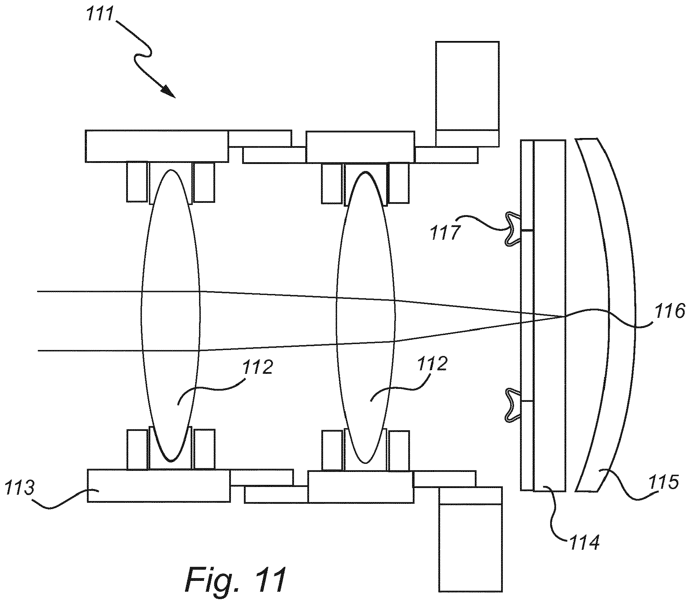

Further, according to another embodiment of the present invention, illustrated in Fig. 11, a plurality of external optics 111, e.g. focusing lenses 112 mounted on lens tube mounts 113 are arranged in front of the monolithic integrated EAM array 114 with external curved mirror 115 in order to achieve a small laser spot 116 size together with the large FOV. This arrangement enables a large FOV while using low cost standard optical components. By achieving a small laser spot 116 size on the EAM array 114 it is possible for the current sensing circuit to sense the photo-current output from individual EAM pixels or small groups of EAM pixels, locate the laser beam and drive/address/modulate a certain portion of the array at any given point in time. This way the power consumption for a large matrix of EAM arrays can be effectively managed.

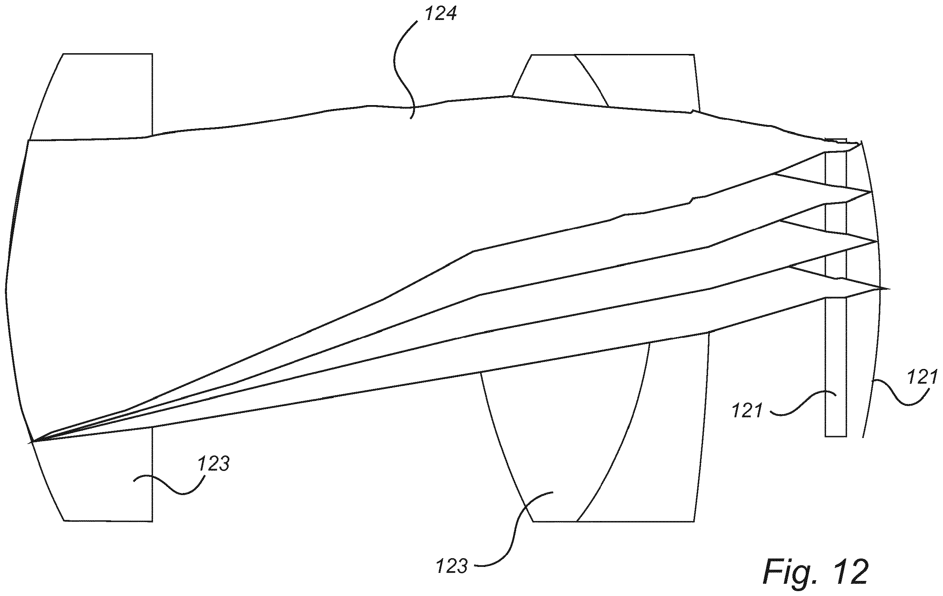

In Fig. 12 a ray optic computer simulation, for an EAM pixel array 121 in full transmission mode and the curved back-side mirror 122 arranged behind the EAM array is illustrated. This arrangement is enabled by using two external focusing lenses 123 arranged in front of the EAM array 121 with incident light 124 passing through the EAM array 121, striking the curved back-side mirror 122, being reflected back through the EAM array 121 onto the external lenses 123 and therefore expanding the FOV. This way, a large FOV is achieved with a large format monolithic integrated EAM and transistor array with a high fill factor.

The EAM pixel size may be in the range of 50 - 250 *µm*² and preferably EAM pixel size of 100 *µm*² and most preferably the EAM pixel size of 250 *µm*² with an EAM array having an optical aperture of 8 mm. In general, the pixel size can be defined in correspondence to the target operation bandwidth. For instance, a 32×32 EAM array with pixel size of 250 *µm*² × 250 *µm*² can be designed to achieve a data rate of 1 Gb/s and FOV of 30 degrees. However, it is understood that for the skilled person in the art it is readily available to make various design choices of EAM pixel sizes and optical apertures to achieve desired variations of FOVs and operation bandwidths.

The arrangement and interconnection between the EAM pixels and transistors can be designed and optimized by advanced simulation tools (e.g. Cadence simulation tools) identifying trade-offs regarding desired device performance and process feasibilities. The monolithic integration arrangement forms compact EAM/transistor arrays which are readily scalable to large format 2D matrices.

Alternatively, or additionally, any of the above-discussed EAM arrangements either with reflective or transmissive modulators may be realized by combination of the modulators with retroreflective corner cube retroreflectors (not shown).

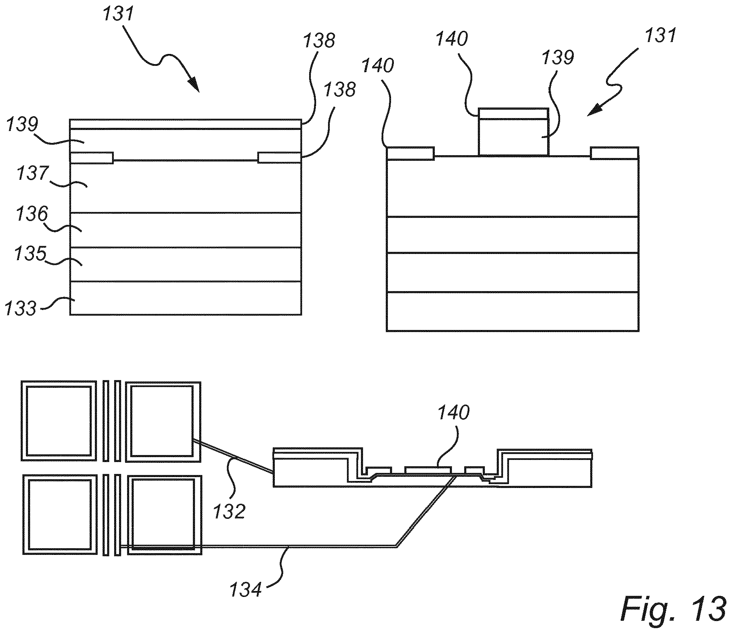

In Fig. 13 an example process with which the monolithic EAM arrays and transistors can be manufactured is illustrated. To realize a monolithic integration of the transistor epi structures 131 with the EAM quantum wells (not shown) in the EAM array, the overgrowth fabrication process by e.g. metalorganic vapor phase epitaxy (MOVPE) is used. The EAM epi structures with intrinsic multiple quantum wells embedded in a PIN diode structure 132 will be first grown on e.g. an InP substrate 133.

Subsequently, desired area 134 between the EAM pixels 132 for embedding the transistors will be etched away and transistors will be grown on the same substrate 133. Afterwards, a dielectric mask (not shown) (e.g. SiN or SiO₂) will be formed (e.g. by material deposition techniques such as evaporation or sputtering) to enable a selective epi growth to integrate the transistor epi layers 131 with designed thickness and doping profiles in the EAM array. The layers may include an InP buffer 135, a field stop layer 136, N-channel 137 and an InGaAs contact 138.

The InP buffer layer 135 is involved in both EAM pin diode structure and embedded transistors utilizing either epi growth or overgrowth methods. In general, a buffer layer 135 is needed to grow epi layers on substrates to ensure the crystal quality of epi structures. In the present invention, InP buffer layer 135 is grown on the Si-InP substrate 133 before growing EAM or transistor structures, such as field stop 136, N-channel 137, InGaAs contact 138 and gate layers 139 in the defined transistors areas.

For the embedded transistors, the thickness of the InP buffer 135 layer can be adjusted during epi overgrowth process. This will provide flexibility to tune the total height of the full transistor structures to optimize the process of device integration. By optimizing the height difference between the EAM pin diode structure and the integrated transistor structure, a plane tomographic surface is guaranteed for the integrated devices. Thus, helping reduce the process complexity, especially in the interconnection steps to link EAM pixels and transistors.

To fabricate the gate terminals 139 of the transistors another epi overgrowth step is performed with yet another selective area epi mask formed by dielectric thin layer deposition, lithography and dry etching steps. It is worth to note, the InGaAs contact layer 138 will be etched away before starting the second overgrowth process step to obtain the gate epi layer, and then the transistor epi structure will be completed by the final InGaAs thin layer 140 to ensure forming high quality gate electrodes.

Transmission lines are enabled by benzocyclobutene (BCB) (not shown) and desired thick electrodes utilizing gold (Au) plating. These will be helpful to ensure the desired high data rate. Controlled impedance microwave transmission lines insure high frequency operation with limited reflections due to impedance mismatch. The BCB is the dielectric used between the metal layers. High speed 50Ω controlled impedance RF transmission lines are formed with thick electroplated Au as the metal signal and ground layers with BCB as the separating dielectric.

The maximum voltage to operate the EAM array is determined by the designed breakdown voltage of the JFET transistors and the desired voltage swing across the EAM pixels to give maximum turn on/off contrast ratio. However, it should be noted that the higher the voltage swing, the higher becomes the power consumption. In accordance to a preferred embodiment of the present invention, the EAM pixels provide the most desired performance with a 5 or 6-volt maximum swing. The JFET transistors are therefore designed to withstand this voltage range on V_{DD} and V_{SS} lines.

The invention has now been described with reference to specific embodiments. It should be noted that the above-mentioned embodiments illustrate rather than limit the invention, and that those skilled in the art will be able to design many alternative embodiments without departing from the scope of the appended claims. For instance, even though the above embodiments have mostly been described with reference to the first and the second switches, it should be appreciated that the number of switches arranged between the first power supply rail and the second power supply rail may be any number of switches without departing from the scope of the claims. Accordingly, in some embodiments each drive circuit may comprise a plurality of switches, e.g. 3 or 4 or 6 switches, etc. depending on the intended circuit and applications. Accordingly, some switches out of the plurality of switches may optionally be operated together as a plurality of first switches and some switches may optionally be operated together as a plurality of second switches, and some switches out of the plurality of switches may optionally be operated in a separate way different from the way said first and second switches are operated. Additionally or alternatively, in some embodiments some of the plurality of switches may also have different functionalities than modulating the EAM pixels.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An electro-absorption modulator (EAM) array comprising a plurality of EAM pixels (11, 93, 102, 132) arranged on a substrate (64, 75, 105, 133), said EAM array (92, 114, 121) comprising:
a plurality of drive circuits integrated with said plurality of EAM pixels (11, 93, 102, 132) in a monolithic arrangement on said substrate (64, 75, 105, 133), each drive circuit comprising:
a plurality of switches connected in series,
a first power supply rail and a second power supply rail, wherein said plurality of switches are connected in between said first power supply rail and said second power supply rail such that a current path is formed from said first power supply rail to said second power supply rail when each one of said switches in said plurality of switches is closed;
wherein said plurality of switches comprises a first switch (T1) and a second switch (T2) which both are n-channel switches; and said first switch is connected in parallel with at least one EAM pixel (11, 93, 102, 132) of said plurality of EAM pixels (11, 93, 102, 132), said at least one EAM pixel (11, 93, 102, 132) being configured to generate a current output in response to a photonic irradiation;
a current sensing circuit connected to said first switch and said at least one EAM pixel (11, 93, 102, 132) and being configured to detect said current output from said at least one EAM pixel (11, 93, 102, 132); and
wherein said drive circuit is configured to be set in at least three modes:
a first mode, wherein said first switch is closed and said second switch is opened in order to discharge said at least one EAM pixel (11, 93, 102, 132);
a second mode, wherein said first switch is opened and said second switch is closed in order to charge said at least one EAM pixel (11, 93, 102, 132);
a third mode, wherein said first switch is opened and said second switch is opened in order to detect said current output from said at least one EAM pixel (11, 93, 102, 132) by means of said current sensing circuit.

2. The EAM array according to claim 1, wherein said first switch of each drive circuit of said plurality of drive circuits is connected in parallel with at least two EAM pixels (11, 93, 102, 132).

3. The EAM array according to any one of claims 1 to 2, wherein said plurality of switches comprises only two switches, said only two switches being said first switch and said second switch.

4. The EAM array according to any one of claims 1 to 3, wherein each of the switches in said plurality of switches is an n-channel switch

5. The EAM array according to any one of the preceding claims, wherein a drain terminal of one of said first and second switches is connected to said first power supply rail and a source terminal of the other of said first and second switches is connected to said second power supply rail.

6. The EAM array according to any one of the preceding claims, wherein said first switch and said second switch are n-channel FET transistors; and
wherein a first gate terminal and a second gate terminal of said first and second n-channel FET transistors are connected to a first alternating current input/drive signal (G1) and a second alternating current input/drive signal (G2), wherein said first alternating current input/drive signal and said second alternating current input/drive signal are complementary.

7. The EAM array according to any one of the preceding claims,
wherein said EAM array (92, 114, 121) is integrated with a back-side flat mirror to reflect an incident light (104, 124).

8. The EAM array according to any one of the preceding claims, further comprising an external curved mirror arranged on the opposite side of said substrate (64, 75, 105, 133) relative to said EAM pixels (11, 93, 102, 132), and wherein said EAM array (92, 114, 121) is arranged to transmit the incident light (104, 124) onto said external curved mirror which is arranged to reflect said incident light (104, 124) back towards said EAM array (92, 114, 121).

9. The EAM array according to any one of the preceding claims , wherein said EAM pixels (11, 93, 102, 132) are arranged in an m-by-n array, said m-by-n array having m rows and n columns, and wherein said EAM array (92, 114, 121) comprises n drive circuits, the first switch of each drive circuit being connected in parallel with each EAM pixel (11, 93, 102, 132) in a respective column of said m-by-n array.

10. The EAM array according to claim 9, wherein each one of said m rows of the m-by-n array comprises at least 32, or at least 64, or at least 100 or at least 500 EAM pixels (11, 93, 102, 132).

11. The EAM array according to claim 9 or 10, wherein each one of said n columns of the m-by-n array comprises at least 32, or at least 64, or at least 100 or at least 500 EAM pixels (11, 93, 102, 132).

12. The EAM array according to any one of the preceding claims, wherein the first switch of each drive circuit is connected in parallel with only two EAM pixels (11, 93, 102, 132) of said plurality of EAM pixels (11, 93, 102, 132).

## Patentansprüche

1. Elektroabsorptionsmodulator-(EAM)-Array, umfassend eine Vielzahl von EAM-Pixeln (11, 93, 102, 132), die auf einem Substrat (64, 75, 105, 133), angeordnet sind, wobei das EAM-Array (92, 114, 121) umfasst: eine Vielzahl von Treiberschaltungen, die mit der Vielzahl von EAM-Pixeln (11, 93, 102, 132) in einer monolithischen Anordnung auf dem Substrat (64, 75, 105, 133) integriert sind, wobei jede Treiberschaltung umfasst: eine Vielzahl von in Reihe geschalteten Schaltern,
eine erste Stromversorgungsschiene und eine zweite Stromversorgungsschiene, wobei die mehreren Schalter zwischen die erste Stromversorgungsschiene und die zweite Stromversorgungsschiene geschaltet sind, so dass ein Strompfad von der ersten Stromversorgungsschiene zu der zweiten Stromversorgung gebildet wird, wenn jeder der Schalter in der Vielzahl von Schaltern geschlossen ist;
wobei die mehreren Schalter einen ersten Schalter (T1) und einen zweiten Schalter (T2) umfassen, die beide n-Kanal-Schalter sind; und der erste Schalter mit mindestens einem EAM-Pixel (11, 93, 102, 132) der Vielzahl von EAM-Pixeln (11, 93, 102, 132) parallel geschaltet ist, wobei das mindestens eine EAM-Pixel (11, 93, 102, 132) konfiguriert ist, um als Reaktion auf eine photonische Bestrahlung eine Stromausgabe zu erzeugen;
eine Stromerfassungsschaltung, die mit dem ersten Schalter und dem mindestens einen EAM-Pixel (11, 93, 102, 132) verbunden ist und konfiguriert ist, um die Stromausgabe von dem mindestens einen EAM-Pixel (11, 93, 102, 132) zu detektieren; und
wobei die Treiberschaltung dazu konfiguriert ist, in mindestens drei Modi eingestellt zu werden:
einen ersten Modus, in dem der erste Schalter geschlossen ist und der zweite Schalter geöffnet ist, um das mindestens eine EAM-Pixel zu entladen (11, 93, 102, 132);
einen zweiten Modus, in dem der erste Schalter geöffnet und der zweite Schalter geschlossen ist, um das mindestens eine EAM-Pixel (11, 93, 102, 132) zu laden;
einen dritten Modus, in dem der erste Schalter geöffnet ist und der zweite Schalter geöffnet wird, um die Stromausgabe von dem mindestens einen EAM-Pixel (11, 93, 102, 132) mittels der Stromerfassungsschaltung zu detektieren.

2. EAM-Array nach Anspruch 1, wobei der erste Schalter jeder Treiberschaltung der Vielzahl von Treiberschaltungen mit mindestens zwei EAM-Pixeln (11, 93, 102, 132) parallelgeschaltet ist.

3. EAM-Array nach einem der Ansprüche 1 bis 2, wobei die Vielzahl an Schaltern nur zwei Schalter umfassen, wobei die nur zwei Schalter der erste Schalter und der zweite Schalter sind.

4. EAM-Array nach einem der Ansprüche 1 bis 3, wobei jeder der Schalter in der Vielzahl von Schaltern ein n-Kanal-Schalter ist.

5. EAM-Array nach einem der vorhergehenden Ansprüche, wobei ein Drain-Anschluss eines der ersten und zweiten Schalter mit der ersten Stromversorgungsschiene verbunden ist und ein Source-Anschluss des anderen der ersten und zweiten Schalter mit der zweiten Stromversorgungsschiene verbunden ist.

6. EAM-Array nach einem der vorhergehenden Ansprüche, wobei der erste Schalter und der zweite Schalter n-Kanal-FET-Transistoren sind; und wobei ein erster Gate-Anschluss und ein zweiter Gate-Anschluss des ersten und zweiten n-Kanal-FET-Transistors mit einem ersten Wechselstrom-Eingangs-/Treibersignal (G1) und einem zweiten Wechselstrom-Eingangs-/Treibersignal (G2) verbunden sind, wobei das erste Wechselstrom-Eingangs-/ Treibersignal und das zweite Wechselstrom-Eingangs-/ Treibersignal komplementär sind.

7. EAM-Array nach einem der vorhergehenden Ansprüche, wobei das EAM-Array (92, 114, 121) mit einem rückseitigen flachen Spiegel integriert ist, um einfallendes Licht (104, 124) zu reflektieren.

8. EAM-Array nach einem der vorhergehenden Ansprüche, ferner umfassend einen externen gekrümmten Spiegel, der relativ zu den EAM-Pixeln (11, 93, 102, 132) auf der gegenüberliegenden Seite des Substrats (64, 75, 105, 133) angeordnet ist, und wobei das EAM-Array (92, 114, 121) angeordnet ist, um das einfallende Licht (104, 124) auf den externen gekrümmten Spiegel zu übertragen, der angeordnet ist, um das einfallende Licht (104, 124) zurück in Richtung des EAM-Arrays (92, 114, 121) zu reflektieren.

9. EAM-Array nach einem der vorhergehenden Ansprüche, wobei die EAM-Pixel (11, 93, 102, 132) in einem m-mal-n-Array angeordnet sind, wobei das m-mal-n-Array m Zeilen und n Spalten aufweist und wobei das EAM-Array (92, 114, 121) n Treiberschaltungen umfasst, wobei der erste Schalter jeder Treiberschaltung mit jedem EAM-Pixel (11, 93, 102, 132) in einer jeweiligen Spalte des m-mal-n-Arrays parallel geschaltet ist.

10. EAM-Array nach Anspruch 9, wobei jede der m Zeilen des m-mal-n-Arrays mindestens 32 oder mindestens 64 oder mindestens 100 oder mindestens 500 EAM-Pixel (11, 93, 102, 132) umfasst.

11. EAM-Array nach Anspruch 9 oder 10, wobei jede der n Spalten des m-mal-n-Arrays mindestens 32 oder mindestens 64 oder mindestens 100 oder mindestens 500 EAM-Pixel (11, 93, 102, 132) umfasst.

12. EAM-Array nach einem der vorhergehenden Ansprüche, wobei der erste Schalter jeder Ansteuerschaltung mit nur zwei EAM-Pixeln (11, 93, 102, 132) der Vielzahl von EAM-Pixeln (11, 93, 102, 132) parallel geschaltet ist.

## Revendications

1. Matrice de modulateurs à électro-absorption (EAM) comprenant une pluralité de pixels EAM (11, 93, 102, 132) agencés sur un substrat (64, 75, 105, 133), ladite matrice EAM (92, 114, 121) comprenant :
une pluralité de circuits de commande intégrés à ladite pluralité de pixels EAM (11, 93, 102, 132) dans un agencement monolithique sur ledit substrat (64, 75, 105, 133), chaque circuit de commande comprenant :
une pluralité d'interrupteurs connectés en série,
un premier rail d'alimentation et un deuxième rail d'alimentation, dans laquelle ladite pluralité d'interrupteurs sont connectés entre ledit premier rail d'alimentation et ledit deuxième rail d'alimentation de telle sorte qu'un chemin de courant est formé depuis ledit premier rail d'alimentation jusqu'audit deuxième rail d'alimentation lorsque chacun desdits interrupteurs dans ladite pluralité d'interrupteurs est fermé;
dans laquelle ladite pluralité d'interrupteurs comprend un premier interrupteur (T1) et un deuxième interrupteur (T2) qui sont tous deux des interrupteurs à canal n ; et ledit premier interrupteur est connecté en parallèle avec au moins un pixel EAM (11, 93, 102, 132) parmi ladite pluralité de pixels EAM (11, 93, 102, 132), ledit au moins un pixel EAM (11, 93, 102, 132) étant configuré pour générer une sortie de courant en réponse à une irradiation photonique ;
un circuit de détection de courant connecté audit premier interrupteur et audit au moins un pixel EAM (11, 93, 102, 132) et étant configuré pour détecter ladite sortie de courant dudit au moins un pixel EAM (11, 93, 102, 132) ; et
dans laquelle ledit circuit de commande est configuré pour être réglé dans au moins trois modes :
un premier mode, dans lequel ledit premier interrupteur est fermé et ledit deuxième interrupteur est ouvert afin de décharger ledit au moins un pixel EAM (11, 93, 102, 132) ;
un deuxième mode, dans lequel ledit premier interrupteur est ouvert et ledit deuxième interrupteur est fermé afin de charger ledit au moins un pixel EAM (11, 93, 102, 132) ;
un troisième mode, dans lequel ledit premier interrupteur est ouvert et ledit deuxième interrupteur est ouvert afin de détecter ladite sortie de courant dudit au moins un pixel EAM (11, 93, 102, 132) au moyen dudit circuit de détection de courant.

2. Matrice EAM selon la revendication 1, dans laquelle ledit premier interrupteur de chaque circuit de commande de ladite pluralité de circuits de commande est connecté en parallèle avec au moins deux pixels EAM (11, 93, 102, 132).

3. Matrice EAM selon l'une quelconque des revendications 1 à 2, dans laquelle ladite pluralité d'interrupteurs comprend seulement deux interrupteurs, lesdits seulement deux interrupteurs étant ledit premier interrupteur et ledit deuxième interrupteur.

4. Matrice EAM selon l'une quelconque des revendications 1 à 3, dans laquelle chacun des interrupteurs de ladite pluralité d'interrupteurs est un interrupteur à canal n.

5. Matrice EAM selon l'une quelconque des revendications précédentes, dans laquelle une borne de drain de l'un desdits premier et deuxième interrupteurs est connectée audit premier rail d'alimentation et une borne de source de l'autre desdits premier et deuxième interrupteurs est connectée audit deuxième rail d'alimentation.

6. Matrice EAM selon l'une quelconque des revendications précédentes, dans laquelle ledit premier interrupteur et ledit deuxième interrupteur sont des transistors FET à canal n ; et
dans laquelle une première borne de grille et une deuxième borne de grille desdits premier et deuxième transistors FET à canal n sont connectées à un premier signal d'entrée/de commande de courant alternatif (G1) et un deuxième signal d'entrée/de commande de courant alternatif (G2), dans laquelle ledit premier signal d'entrée/de commande de courant alternatif et ledit deuxième signal d'entrée/de commande de courant alternatif sont complémentaires.

7. Matrice EAM selon l'une quelconque des revendications précédentes,
dans laquelle ladite matrice EAM (92, 114, 121) est intégrée à un miroir plat arrière pour réfléchir une lumière incidente (104, 124).

8. Matrice EAM selon l'une quelconque des revendications précédentes, comprenant en outre un miroir incurvé externe agencé sur le côté opposé dudit substrat (64, 75, 105, 133) par rapport auxdits pixels EAM (11, 93, 102, 132), et dans laquelle ladite matrice EAM (92, 114, 121) est agencée pour transmettre la lumière incidente (104, 124) sur ledit miroir incurvé externe qui est agencé pour réfléchir ladite lumière incidente (104, 124) en retour vers ladite matrice EAM (92, 114, 121).

9. Matrice EAM selon l'une quelconque des revendications précédentes, dans laquelle lesdits pixels EAM (11, 93, 102, 132) sont agencés en une matrice m par n, ladite matrice m par n ayant m lignes et n colonnes, et dans laquelle ladite matrice EAM (92, 114, 121) comprend n circuits de commande, le premier interrupteur de chaque circuit de commande étant connecté en parallèle avec chaque pixel EAM (11, 93, 102, 132) dans une colonne respective de ladite matrice m par n.

10. Matrice EAM selon la revendication 9, dans laquelle chacune desdites m lignes de la matrice m par n comprend au moins 32, ou au moins 64, ou au moins 100 ou au moins 500 pixels EAM (11, 93, 102, 132).

11. Matrice EAM selon la revendication 9 ou 10, dans laquelle chacune desdites n colonnes de la matrice m par n comprend au moins 32, ou au moins 64, ou au moins 100 ou au moins 500 pixels EAM (11, 93, 102, 132).

12. Matrice EAM selon l'une quelconque des revendications précédentes, dans laquelle le premier interrupteur de chaque circuit de commande est connecté en parallèle avec seulement deux pixels EAM (11, 93, 102, 132) de ladite pluralité de pixels EAM (11, 93, 102, 132).
